(19) Europäisches Patentamt / European Patent Office / Office européen des brevets

(11) **EP 4 637 125 A1**

(12) **EUROPEAN PATENT APPLICATION**
published in accordance with Art. 153(4) EPC

(43) Date of publication:
**22.10.2025 Bulletin 2025/43**

(21) Application number: **23902231.2**

(22) Date of filing: **22.09.2023**

(51) International Patent Classification (IPC):
**H04M 1/72454** (2021.01)

(86) International application number:
**PCT/CN2023/120803**

(87) International publication number:
**WO 2024/125026 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.12.2022 CN 202211610494**

(71) Applicant: **TCL COMMUNICATION (NINGBO) CO.,
LTD.**
**Ningbo, Zhejiang 315040 (CN)**

(72) Inventors:
• **YU, Longjie**
  **Ningbo, Zhejiang 315040 (CN)**
• **AN, Xinrong**
  **Ningbo, Zhejiang 315040 (CN)**

(74) Representative: **Herrero & Asociados, S.L.**
**Cedaceros, 1**
**28014 Madrid (ES)**

(54) **ANTENNA REGULATION AND CONTROL METHOD AND APPARATUS, AND STORAGE MEDIUM AND ELECTRONIC DEVICE**

(57) The present application relates to the technical field of the Internet of Things. Disclosed are an antenna regulation and control method and apparatus, and a storage medium and an electronic device. The method comprises: if a screen state is a screen-on state, extracting multiple groups of sensing data of an acceleration sensor according to a corresponding cycle and the number of groups; calculating an acceleration variation; and according to the acceleration variation, obtaining moving and standing states for determining whether to disable a specific-absorption-ratio reduction mechanism. The present application ensures the reliability of antenna regulation and control and reduces the costs of antenna regulation and control.

Monitor a screen state of a device by using a predetermined network module in the device. — S110

When the screen state is a screen-on state, extracting a plurality of groups of sensing data sensed by an acceleration sensor in the device according to a period and a number of groups. — S120

Calculate an acceleration variation based on the plurality of groups of sensing data. — S130

Determine, according to the acceleration variation, a motion state for determining whether to disable a mechanism for reducing an electromagnetic wave absorption ratio of an antenna in the device. — S140

FIG. 1

## Description

This application claims the priority of Chinese Patent Application No. 2022116104946, entitled "ANTENNA REGULATION AND CONTROL METHOD AND APPARATUS, AND STORAGE MEDIUM AND ELECTRONIC DEVICE", filed on December 12, 2022, the disclosure of which is incorporated herein by reference in its entirety.

FIELD OF THE DISCLOSURE

The present disclosure relates to a technical field of Internet of Things, and specifically to an antenna control method, device, storage medium and electronic device.

BACKGROUND

Taking mobile phones as an example, in many devices, there is a conflict between the transmission performance of the antenna and the radiation exposure to the human body, which has long been a common challenge for many device manufacturers. In order to solve this problem, it is usually necessary to adjust the transmission power of the antenna and sacrifice the RF power to reduce the electromagnetic absorption ratio (SAR) to avoid radiation to the human body.

Technical problem

At present, there is a related technology that adjusts the transmission power of the antenna in the device according to the state of the object approaching or moving away. Under the current method, it is usually necessary to add an additional electromagnetic absorption ratio (SAR) sensor to the device to detect the object moving away, and the cost of antenna control is relatively high.

Technical Solution

The present disclosure provides a solution that can effectively reduce the cost of antenna control.

The present disclosure provides the following technical solutions:

According to one embodiment of the present disclosure, an antenna control method includes: monitoring a screen state of a device by using a predetermined network module in the device; when the screen state is a screen-on state, extracting a plurality of groups of sensing data sensed by an acceleration sensor in the device according to a cycle and a number of groups; calculating an acceleration variation based on the plurality of groups of sensing data; and determining, according to the acceleration variation, a motion state for determining whether to disable a mechanism for reducing an electromagnetic wave absorption ratio of an antenna in the device.

According to another embodiment of the present disclosure, an antenna control device is provided. The device includes a predetermined network module. The predetermined network module includes: a state detection unit, configured to monitor a screen state of the device; a data extraction unit, configured to extract a plurality of groups of sensing data sensed by an acceleration sensor in the device according to a cycle and a number of groups when the screen state is a screen-on state; a calculation processing unit, configured to calculate an acceleration variation based on the plurality of groups of sensing data; and a state determining unit, configured to determine, according to the acceleration variation, a motion state for determining whether to disable a mechanism for reducing an electromagnetic wave absorption ratio of an antenna in the device.

In some embodiments of the present disclosure, the predetermined network module is a wireless local area network module, and the number of groups is a first predetermined number of groups. The data extraction unit is configured to determine the cycle, and extract the plurality of groups of sensing data sensed by the acceleration sensor in the device at a framework layer according to the cycle and the first predetermined number of groups. Each of the plurality of groups of sensing data is different.

In some embodiments of the present disclosure, the data extraction unit is configured to: determine a last motion state of the device by the wireless local area network module; set the cycle corresponding to the wireless local area network module as a first cycle when the last motion state of the device is a moving state; set the cycle corresponding to the wireless local area network module as a second cycle less than the first cycle when the last motion state of the device is a stationary state.

In some embodiments of the present disclosure, the motion states include a moving state or a stationary state; the state determining unit is used to: determine that the device is in the moving state when the acceleration variation is greater than a first threshold; and determine that the device is in the stationary state when the acceleration variation is less than the first threshold.

In some embodiments of the present disclosure, the wireless LAN module also includes a mechanism switch unit which is used to enable a mechanism for reducing the electromagnetic wave absorption ratio of a wireless local area network antenna by the wireless local area network module when the motion state is a moving state, and to disable the mechanism for reducing the electromagnetic wave absorption ratio of the wireless local area network antenna by the wireless local area network module when the motion state is a stationary state.

In some embodiments of the present disclosure, the wireless LAN module also includes a marking unit which is used to: set a first flag bit in the framework layer by the wireless local area network module when the mechanism for reducing the electromagnetic wave absorption ratio of the wireless local area network antenna is enabled; set the second flag bit is in the framework layer by the wireless local area network module when the mechanism for reducing the electromagnetic wave absorption ratio of the wireless local area network antenna is disabled; enable a mechanism for reducing the electromagnetic wave absorption ratio of a wireless wide area network antenna by the wireless wide area network module when a wireless wide area network (WAN) module detects that a flag bit in the framework layer transitions from the second flag bit to the first flag bit; and disable the mechanism for reducing the electromagnetic wave absorption ratio of the wireless wide area network antenna by the wireless wide area network module when the wireless wide area network module detects that the flag bit in the framework layer transitions from the first flag bit to the second flag bit.

In some embodiments of the present disclosure, the predetermined module is a wireless wide area network module, the number of groups is a second predetermined number of groups greater than the first predetermined number of groups. The data extraction unit is used to: determine the cycle by the wireless wide area network module, and extract, by the wireless wide area network module, the plurality of groups of sensing data sensed by the acceleration sensor in the device at an application according to the cycle and the second predetermined number of groups.

In some embodiments of the present disclosure, the data extraction unit is used to: determine a last motion state of the device by the wireless wide area network module; set the cycle corresponding to the wireless wide area network module as a third cycle when the last motion state of the device is a moving state; set the cycle corresponding to the wireless wide area network module as a fourth cycle less than the third cycle when the last motion state of the device is a stationary state.

In some embodiments of the present disclosure, the motion states include a moving state or a stationary state; the state determining unit is used to: determine that the device is in the moving state when the acceleration variation is greater than a second threshold greater than the first threshold, and determine that the device is in the stationary state when the acceleration variation is less than the second threshold.

In some embodiments of the present disclosure, the wireless wide area network module also includes a mechanism switch unit which is used to: enable a mechanism for reducing the electromagnetic wave absorption ratio of a wireless wide area network antenna by the wireless wide area network module when the motion state is a moving state; and disable the mechanism for reducing the electromagnetic wave absorption ratio of the wireless wide area network antenna by the wireless wide area network module when the stationary state is a stationary state.

In some embodiments of the present disclosure, the wireless LAN module further includes a screen-off processing unit, which is used to enable the mechanism for reducing the electromagnetic wave absorption ratio of the wireless local area network antenna by the wireless LAN module in response to a screen-off state.

In some embodiments of the present disclosure, the wireless WAN module further includes a screen-off processing unit, which is used to enable the mechanism for reducing the electromagnetic wave absorption ratio of the wireless local area network antenna by the wireless WAN module in response to a screen-off state.

According to another embodiment of the present disclosure, a storage medium stores computer program thereon. When the computer program is executed by a processor of a computer, the computer executes the method described in the embodiment of the present disclosure.

According to another embodiment of the present disclosure, an electronic device includes a memory storing computer program, and a processor executing the computer program to perform the method described in the embodiment of the present disclosure.

According to another embodiment of the present disclosure, a computer program product or a computer program includes a computer instruction stored in a computer-readable storage medium. A processor of a computer device reads the computer instruction from the computer-readable storage medium to perform the method provided in various optional implementations described in the embodiments of the present disclosure.

Advantageous effects

According to embodiments of the present disclosure, an antenna control method includes: monitoring a screen state of a device by using a predetermined network module in the device; when the screen state is a screen-on state, extracting a plurality of groups of sensing data sensed by an acceleration sensor in the device according to a cycle and a number of groups; calculating an acceleration variation based on the plurality of groups of sensing data; and determining, according to the acceleration variation, a motion state for determining whether to disable a mechanism for reducing an electromagnetic wave absorption ratio of an antenna in the device.

In this way, on the one hand, the antenna can be controlled by combining the predetermined network module in the device with an acceleration sensor, and the cost is extremely low. On the other hand, when the screen state is first detected as being on, multiple groups of sensing data are further extracted according to the cycle and number of groups corresponding to the predetermined network module to perform motion state judgment to control the antenna. The motion state can accurately reflect the user's use status of the device, and can ensure the reliability of the antenna control. Furthermore, the cost of antenna control can be reduced while ensuring the reliability of the antenna control.

BRIEF DESCRIPTION OF THE DRAWINGS

In order to more clearly illustrate the technical solutions in the embodiments of the present disclosure, the drawings required to be used in the description of the embodiments will be briefly introduced below, and it is obvious that the drawings described below are only some embodiments of the present disclosure, and for those skilled in the art, other drawings can be acquired according to these drawings without creative labor.

FIG. 1 illustrates a flow chart of a method of controlling an antenna according to an embodiment of the present disclosure.
FIG. 2 illustrates a flow chart of a method of controlling an antenna according to another embodiment of the present disclosure.
FIG. 3 illustrates a flow chart of a method of controlling an antenna according to another embodiment of the present disclosure.
FIG. 4 illustrates a block diagram of an antenna control device according to an embodiment of the present disclosure.
FIG. 5 illustrates a block diagram of an electronic device according to an embodiment of the present disclosure.

DETAILED DESCRIPTION OF THE PRESENT DISCLOSURE

The following will be combined with the drawings in the embodiments of the present disclosure to clearly and completely describe the technical solutions in the embodiments of the present disclosure. Obviously, the described embodiments are only part of the embodiments of the present disclosure, not all embodiments. Based on the embodiments in the present disclosure, all other embodiments obtained by those skilled in the art without creative work are within the scope of protection of the present disclosure.

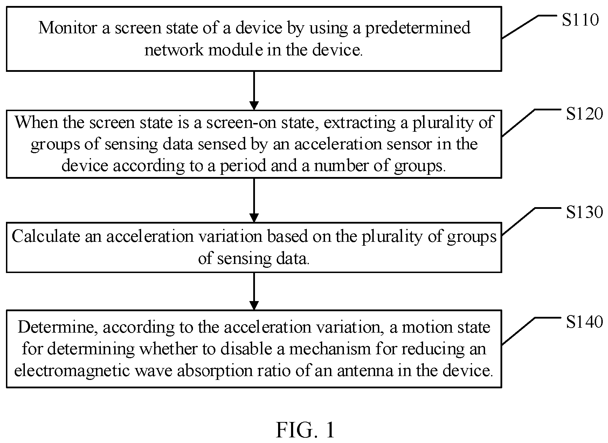

FIG. 1 illustrates a flow chart of a method of controlling an antenna according to an embodiment of the present disclosure. The antenna control method can be applied in any terminal having a predetermined network module and an acceleration sensor, such as a computer, a mobile phone, a smart watch, etc.

As shown in FIG. 1, the method of controlling an antenna includes steps S110 to S140.

At step S110, monitor a screen state of a device by using a predetermined network module in the device. At step S120, when the screen state is a screen-on state, extract a plurality of groups of sensing data sensed by an acceleration sensor in the device according to a period and a number of groups. At step S130, calculate an acceleration variation based on the plurality of groups of sensing data. At step S140, determine, according to the acceleration variation, a motion state for determining whether to disable a mechanism for reducing an electromagnetic wave absorption ratio of an antenna in the device.

The predetermined network module may be a wireless wide area network (WWAN) module or a wireless local area network (WLAN) module. After the device is turned on, the predetermined network module monitors the screen state of the device in real time or at a scheduled time, and the screen state may include a screen-on state and a screen-off state.

In response to the screen-on state, the predetermined network module can extract multiple groups of sensing data of the acceleration sensor in the device according to the cycle and number of groups corresponding to the predetermined network module. The sensing data can be the instantaneous acceleration value of the device in the three directions of xyz.

For example, upon a condition that the cycle corresponding to the predetermined network module is 1 second and the number of groups corresponding to the predetermined network module is 2, the sensing data can be extracted once every 1 second until 2 groups of sensing data are obtained. It can be understood that different predetermined network modules can correspond to different cycles and numbers of groups.

The sensing data may comprise instantaneous acceleration values of the device along the x-axis, y-axis, and z-axis. A plurality of groups of sensing data may be subjected to computational processing to derive an acceleration variation.

Based on the determined acceleration variation, a motion state of the device may be identified. The motion state may include, but is not limited to, a moving state and a stationary state. A predetermined network module may be configured to determine, according to the motion state, whether to disable a Specific Absorption Rate (SAR) reduction mechanism of the wireless local area network antenna of the device.

The mechanism of reducing electromagnetic wave absorption ratio is also called Specific Absorption Rate (SAR) reduction mechanism. The mechanism of reducing electromagnetic wave absorption ratio can be described as follows: based on a trigger condition that an earpiece or a hotspot is switched on or switched off, the communication band supported by the device will decide whether to reduce power and adjust power values according to different combinations of the earpiece and hotspot switch states.

When the SAR reduction mechanism of the antenna is enabled, the communication bands supported by the device may adjust their transmission power levels based on the trigger condition that the earpiece or the hotspot is switched on or switched off. Specifically, the transmission power may be reduced, and different levels of power reduction may be applied depending on the combination of the states of the earpiece and the hotspot. When the SAR reduction mechanism of the antenna is disabled, all communication bands supported by the device operate at their maximum transmission power, regardless of the on/off states of the earpiece or the hotspot.

In this way, based on step S110 to step S140, on the one hand, the antenna can be controlled by combining a predetermined network module in the device with an acceleration sensor, and the cost is extremely low. On the other hand, when the screen state is first detected as being on, multiple groups of sensing data are further extracted according to the cycle and number of groups corresponding to the predetermined network module to perform motion state judgment to control the antenna. The motion state can accurately reflect the user's usage status of the device, and can ensure the reliability of the antenna control. Furthermore, the cost of antenna control can be reduced while ensuring the reliability of the antenna control.

The following describes further specific optional embodiments of each step performed when antenna control is performed in the embodiment of FIG. 1.

In one embodiment, the predetermined network module is a wireless local area network (LAN) module, and the number of groups is a first predetermined number of groups. The extracting the plurality of groups of sensing data sensed by the acceleration sensor in the device according to the period and the number of groups comprises: determining the cycle by the wireless local area network module; and extracting, by the wireless local area network module, the plurality of groups of sensing data sensed by the acceleration sensor in the device at a framework layer according to the cycle and the first predetermined number of groups, where each of the plurality of groups of sensing data is different.

After the wireless local area network module determines its corresponding cycle, it extracts sensing data once every cycle until the sensing data of the first predetermined number of groups is obtained, thereby obtaining multiple groups of sensing data. It is necessary to ensure that each group of sensing data in the multiple groups of sensing data is different. The wireless local area network module extracts multiple groups of sensing data of the acceleration sensor at the framework layer.

In one embodiment, the determining the cycle by the wireless local area network module comprises: determining a last motion state of the device by the wireless local area network module; setting the cycle corresponding to the wireless local area network module set as a first cycle when the last motion state of the device is a moving state; and setting the cycle corresponding to the wireless local area network module as a second cycle less than the first cycle when the last motion state of the device is a stationary state.

The last motion state may be the motion state determined in the last antenna control before the current antenna control. If the last motion state of the device is a moving state, the cycle corresponding to the wireless LAN module is the first cycle. In one example, the first cycle is 30 seconds. If the last motion state of the device is a stationary state, the cycle corresponding to the wireless LAN module is the second cycle. The first cycle is greater than the second cycle. In one example, the second cycle is 1 second.

In one embodiment, the multiple groups of sensing data are two groups of sensing data as shown in the following table.

| Group | Sensor data |
|---|---|
| Group 1 | x1 , y1 , z1 |
| Group 2 | x2 , y2 , z2 |

The acceleration variation is calculated based on the plurality of groups of sensing data by the following formula:

$$a= \sqrt{(x_2 - x_1)^2 + (y_2 - y_1)^2 + (z_2 - z_1)^2},$$

where a stands for a change in acceleration.

In one embodiment, the motion state includes a moving state or a stationary state. The motion state of the device is obtained according to the acceleration variation. When the acceleration variation is greater than a first threshold, the device is in a moving state. When the acceleration variation is less than the first threshold, the device is in a stationary state.

In one example, the first threshold is 0.02m/s2. When the acceleration variation is greater than 0.02m/s2, the device is in the moving state. When the acceleration variation is less than 0.02m/s2, the device is in the stationary state. Based on this example, the wireless LAN module can determine whether the device is in the stationary state or the moving state. The detection sensitivity is accurate. The device is in the stationary state, which may include scenes such as the device being stationary on a desktop, the device being stationary and tilted on a bracket. The device is in a moving state, which may include scenes such as the user holding the device to browse the web and make calls, and the device being placed in a pocket.

In one embodiment, after determining the motion state according to the acceleration variation, the method further comprises: when the motion state is a moving state, a mechanism for reducing the electromagnetic wave absorption ratio of a wireless local area network antenna is enabled by the wireless local area network module; and when the stationary state is a stationary state, the mechanism for reducing the electromagnetic wave absorption ratio of the wireless local area network antenna is disabled by the wireless local area network module.

When the stationary state is a moving state, the wireless LAN module enables the mechanism for reducing the electromagnetic wave absorption ratio of the wireless local area network antenna of the wireless LAN antenna. When the stationary state is a stationary state, the wireless LAN module disables the mechanism for reducing the electromagnetic wave absorption ratio of the wireless local area network antenna of the wireless LAN antenna.

The wireless local area network (WLAN) module is operated in the framework layer. The wireless local area network antenna of the wireless local area network (WLAN) module may refer to a Wi-Fi transmitting antenna which includes Wi-Fi 2.4G, Wi-Fi 5G and Wi-Fi 6E antennas, etc.

The wireless LAN module can be used to enable the mechanism for reducing the electromagnetic wave absorption ratio of the Wi-Fi transmitting antenna in a moving state. The wireless LAN module can be used to disable the mechanism for reducing the electromagnetic wave absorption ratio of the Wi-Fi transmitting antenna in a stationary state.

In one embodiment, the method further comprises:
setting a first flag bit in the framework layer by the wireless local area network module when the mechanism for reducing the electromagnetic wave absorption ratio of the wireless local area network antenna is enabled; setting the second flag bit is in the framework layer by the wireless local area network module when the mechanism for reducing the electromagnetic wave absorption ratio of the wireless local area network antenna is disabled; enabling a mechanism for reducing the electromagnetic wave absorption ratio of a wireless wide area network antenna by the wireless wide area network module when a wireless wide area network (WAN) module detects that a flag bit in the framework layer transitions from the second flag bit to the first flag bit; and disabling the mechanism for reducing the electromagnetic wave absorption ratio of the wireless wide area network antenna by the wireless wide area network module when the wireless wide area network module detects that the flag bit in the framework layer transitions from the first flag bit to the second flag bit.

The first flag bit is, for example, "1", and the second flag bit is, for example, "0". The first flag bit marked at the framework layer is indicative of enabling the mechanism for reducing the electromagnetic wave absorption ratio of the wireless local area network antenna of the wireless LAN antenna, and the second flag bit marked at the framework layer is indicative of disabling the mechanism for reducing the electromagnetic wave absorption ratio of the wireless local area network antenna of the wireless LAN antenna.

By marking the flag bit, the wireless wide area network module (WWAN) can monitor the status of the mechanism for reducing the electromagnetic wave absorption ratio of the wireless local area network antenna through the flag bit. Furthermore, the wireless wide area network module (WWAN) can further switch the mechanism for reducing the electromagnetic wave absorption ratio of the wireless wide area network antenna according to the flag bit. **In** this way, the wireless wide area network module (WWAN) and the wireless local area network module (WLAN) can synchronously enable or disable the SAR reduction mechanism of the corresponding antenna.

Furthermore, in one embodiment, after the screen state of the device is monitored by a predetermined network module in the device, the method further includes: the mechanism for reducing the electromagnetic wave absorption ratio of the wireless local area network antenna is enabled by the wireless LAN module in response to a screen-off state. When the wireless LAN module detects that the screen state is the screen-off state, it no longer extracts sensing data and directly enables the mechanism for reducing the electromagnetic wave absorption ratio of the wireless local area network antenna. Furthermore, when the screen state is screen-off state, the data of the acceleration sensor can be avoided from being extracted, the need to periodically wake up the CPU that is originally in standby mode can be avoided, and the power consumption of the device in standby mode can be avoided from being increased.

Furthermore, for enabling the mechanism for reducing the electromagnetic wave absorption ratio of the wireless LAN antenna, the first flag bit can be written in the framework layer through the wireless LAN module. When the wireless WAN module monitors that the flag bit in the framework layer changes from the second flag bit to the first flag bit, the mechanism for reducing the electromagnetic wave absorption ratio of the wireless WAN antenna is enabled through the wireless WAN module. When the wireless WAN module monitors that the flag bit in the framework layer changes from the first flag bit to the second flag bit, the mechanism for reducing the electromagnetic wave absorption ratio of the wireless WAN antenna is disabled through the wireless WAN module.

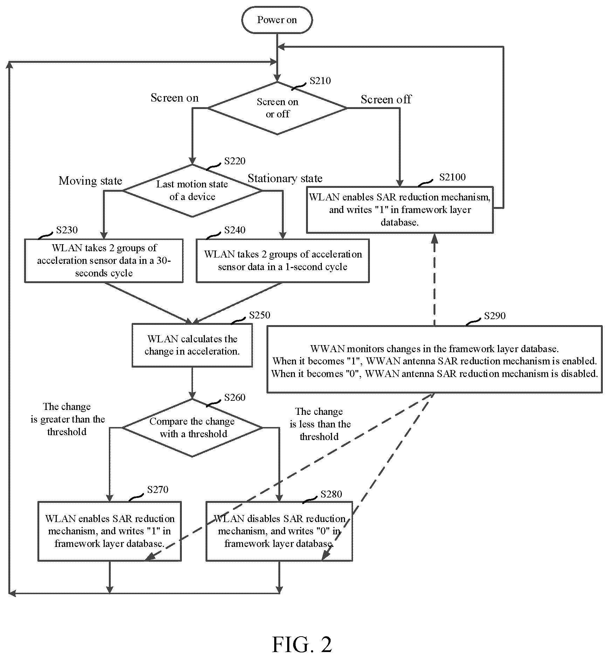

Referring to FIG. 2, in one scenario, taking antenna control of a mobile phone as an example, the mobile phone performs antenna control through a wireless local area network module by applying the embodiment. The antenna control process includes steps S210 to S2100 as shown in FIG. 2.

At step S210, determine whether the screen state of the mobile phone is screen-on state or screen-off state.

Specifically, the screen state of the mobile phone is monitored through a predetermined network module in the mobile phone, and the screen state includes whether the screen is screen-on state or screen-off state. In this step, the predetermined network module is a wireless local area network (WLAN) module.

At step S220, determine the last mobile phone state.

The last motion state of the mobile phone is determined by the wireless local area network module. When the last motion state of the mobile phone is a moving state, the cycle corresponding to the wireless local area network module is a first cycle. When the last motion state of the mobile phone is a stationary state, the cycle corresponding to the wireless local area network module is a second cycle. The first cycle is greater than the second cycle. For example, the first cycle is 30 seconds, and the second cycle is 1 second. The number of groups corresponding to the wireless local area network module is a first predetermined number of groups, and the first predetermined number of groups is 2 groups.

At step S230, WLAN takes 2 different groups of acceleration sensor data (i.e., 2 groups of sensing data) with a cycle of 30 seconds. Specifically, when the last motion state of the mobile phone is a moving state, the wireless local area network module extracts 2 groups of sensing data of the acceleration sensor in the mobile phone at the framework layer according to the first cycle of 30 seconds and the first predetermined number of groups.

At step S240, WLAN takes 2 different groups of acceleration sensor data (i.e., 2 groups of sensing data) with a cycle of 1 second. Specifically, when the last motion state of the mobile phone is stationary state, the wireless local area network module extracts 2 groups of sensing data of the acceleration sensor in the mobile phone at the framework layer according to the first cycle of 1 second and the first predetermined number of groups.

Step S250, WLAN calculates the variation of the acceleration sensor. Specifically, there are two groups of sensing data as shown in the following table.

| Group | Sensor data |
|---|---|
| Group 1 | $x_1$ , $y_1$ , $z_1$ |
| Group 2 | $x_2$ , $y_2$ , $z_2$ |

The acceleration variation is calculated based on the plurality of groups of sensing data by the following formula:

$$a= \sqrt{(x_2 - x_1)^2 + (y_2 - y_1)^2 + (z_2 - z_1)^2}$$ , where a is the acceleration variation.

At step S260: compare the change amount with a threshold.

Specifically, when the acceleration variation is greater than the first threshold, the mobile phone is in a moving state. When the acceleration variation is less than the first threshold, the mobile phone is in a stationary state. The first threshold is 0.02m/s2, so if the acceleration variation is greater than 0.02m/s2, the mobile phone is in a moving state. When the acceleration variation is less than 0.02m/s2, the mobile phone is in a stationary state.

At step S270: WLAN enables the SAR reduction mechanism, and writes "1" into the framework layer database.

Specifically, when the dynamic state is a moving state, an electromagnetic wave absorption ratio reduction mechanism of the wireless local area network antenna is enabled through the wireless local area network module (WLAN). The first flag bit is written in the framework layer through the wireless local area network module, and the first flag bit is "1".

The wireless local area network (WLAN) antenna corresponding to the wireless local area network (WLAN) module may refer to a Wi-Fi transmitting antenna, and the Wi-Fi transmitting antenna includes Wi-Fi 2.4G, Wi-Fi 5G and Wi-Fi 6E antennas, etc.

At step S280: The WLAN module disables the SAR reduction mechanism, and writes "0" into the Framework layer database.

Specifically, when the motion state is a stationary state, the wireless local area network module (WLAN) disables the mechanism for reducing the electromagnetic wave absorption ratio of the wireless local area network antenna, and writes a second flag bit "0" in the framework layer through the wireless local area network module.

At step S290, WWAN monitors the changes in the Framework layer database. If flag bit becomes "1", the WWAN antenna SAR reduction mechanism is enabled. If flag bit becomes "0", the WWAN antenna SAR reduction mechanism is disabled.

Specifically, when the wireless wide area network module (WWAN) detects that the flag bit in the framework layer changes from the second flag bit to the first flag bit, the wireless wide area network module enables the mechanism for reducing the electromagnetic wave absorption ratio of the wireless wide area network antenna (WWAN antenna); if the wireless wide area network module detects that the flag bit in the framework layer changes from the first flag bit to the second flag bit, the wireless wide area network module disables the mechanism for reducing the electromagnetic wave absorption ratio of the wireless wide area network antenna (WWAN antenna). The wireless wide area network module (WWAN) and the wireless local area network module (WLAN) can synchronously enable or disable the SAR reduction mechanism of the corresponding antenna.

At step S2100: WLAN enables the SAR reduction mechanism and writes "1" into the Framework layer database.

Specifically, after step S210, when the screen state is screen-off state, step S2100 is executed. The mechanism for reducing the electromagnetic wave absorption ratio of the wireless local area network antenna (SAR reduction mechanism) of the wireless LAN antenna is enabled through the wireless LAN module, and the first flag bit "1" is written in the framework layer through the wireless LAN module.

When the wireless LAN module detects that the screen is screen-off state, it will no longer extract the sensing data and directly enable the electromagnetic wave absorption ratio reduction mechanism of the wireless LAN antenna. In addition, when the phone screen is off, it can avoid extracting the acceleration sensor data, avoid the need to periodically wake up the CPU that was originally in standby mode, and avoid increasing the power consumption of the phone in standby mode.

Furthermore, in one embodiment, the predetermined module is a wireless wide area network module, the number of groups is a second predetermined number of groups, and the second predetermined number of groups is greater than the first predetermined number of groups; extracting multiple groups of sensing data of the acceleration sensor in the device according to the cycle and number of groups corresponding to the predetermined network module includes: determining the corresponding cycle through the wireless wide area network module; extracting multiple groups of sensing data of the acceleration sensor in the device at the application layer through the wireless wide area network module according to the cycle corresponding to the wireless wide area network module and the second predetermined number of groups.

After the wireless wide area network module determines its corresponding cycle, it extracts sensing data once every cycle until the sensing data of the second predetermined number of groups is obtained, thereby obtaining multiple groups of sensing data. The wireless wide area network module extracts multiple groups of sensing data of the acceleration sensor at the application layer. Furthermore, the second predetermined number of groups is greater than the first predetermined number of groups. In one example, the second predetermined number of groups is 11 groups, and the multiple groups of sensing data are 11 groups of sensing data.

In one embodiment, determining the corresponding cycle through the wireless wide area network module includes: determining the last movement or stillness state of the device through the wireless wide area network module; if the last movement or stillness state of the device was a moving state, then the cycle corresponding to the wireless wide area network module is a third cycle; if the last movement or stillness state of the device was a stationary state, then the cycle corresponding to the wireless wide area network module is a fourth cycle, and the third cycle is greater than the fourth cycle.

The last motion state may be the motion state determined in the last antenna control before the current antenna control. If the last motion state of the device is a moving state, the cycle corresponding to the wireless wide area network module is the third cycle. In one example, the third cycle is 30 seconds. If the last motion state of the device is a stationary state, the cycle corresponding to the wireless wide area network module is the fourth cycle. The third cycle is greater than the fourth cycle. In one example, the fourth cycle is 1 second.

In one embodiment, the multiple groups of sensing data are specifically 11 groups of sensing data as shown in the following table.

| Group | Sensor data |
|---|---|
| Group 1 | $x_1$ , $y_1$ , $z_1$ |
| Group 2 | $x_2$ , $y_2$ , $z_2$ |
| | |
| Group 11 | $x_{11}$ , $y_{11}$ , $z_{11}$ |

The acceleration variation is calculated based on the plurality of groups of sensing data by the following formula:

$$a1=\sqrt{(x_2 - x_1)^2 + (y_2 - y_1)^2 + (z_2 - z_1)^2}$$

$$a2=\sqrt{(x_3 - x_2)^2 + (y_3 - y_2)^2 + (z_3 - z_2)^2}$$

...

$$a10=\sqrt{(x_{11} - x_{10})^2 + (y_{11} - y_{10})^2 + (z_{11} - z_{10})^2}$$

Then, an average value $a_{avg}$ used as the acceleration variation is obtained by averaging 8 acceleration values selected from the 10 acceleration values $a_1, a_2, a_3, a_4, a_5, a_6, a_7, a_8, a_9, a_{10}$ excluding the maximum value and the minimum value.

In one embodiment, the motion state includes a moving state or a stationary state. The motion state of the device is obtained according to the acceleration variation, including: if the acceleration variation is greater than a second threshold, the device is in a moving state, and the second threshold is greater than the first threshold; if the acceleration variation is less than the second threshold, the device is in a stationary state.

In one example, the second threshold is 0.06m/s2. If the acceleration variation is greater than 0.02m/s2, the device is determined in a moving state. When the acceleration variation is less than 0.02m/s2, the device is determined in in a stationary state. Based on this example, the wireless wide area network module can clearly distinguish between the two different states of the device being in the stationary state and the moving state, and the detection sensitivity is accurate. When the device is in the stationary state, which may include scenes such as the device being stationary on a desktop, the device being stationary and tilted on a bracket, etc. The device is in a moving state, which may include scenes such as the user holding the device to browse the web and make calls, and the device being placed in a pocket, etc.

In one embodiment, after determining the motion state according to the acceleration variation, the method further comprises: when the motion state is a moving state, enabling a mechanism for reducing the electromagnetic wave absorption ratio of a wireless wide area network antenna by the wireless wide area network module; and when the stationary state is a stationary state, disabling the mechanism for reducing the electromagnetic wave absorption ratio of the wireless wide area network antenna by the wireless wide area network module.

The wireless WAN module is operated in the application layer. The wireless WAN antenna corresponding to the wireless WAN module can be a transmitting antenna of Global System for Mobile Communications (GSM), Wideband Code Division Multiple Access (WCDMA), LTE, 5G (the 5th Generation, the fifth generation of wireless communication technology), etc.

The wireless WAN module can be used to enable the mechanism for reducing the electromagnetic wave absorption ratio of the wireless WAN antenna in a moving state. the wireless WAN module can be used to disable the mechanism for reducing the electromagnetic wave absorption ratio of the wireless WAN antenna in a stationary state.

In one embodiment, after the screen state of the device is monitored by a predetermined network module in the device, the method further includes: if the screen state is screen-off state, enabling the mechanism for reducing the electromagnetic wave absorption ratio of the wireless wide area network antenna through the wireless wide area network module. When the device screen is in a screen-off state, the data of the acceleration sensor can be avoided, the need to periodically wake up the CPU that is originally in standby mode can be avoided, and the power consumption of the device standby mode can be avoided.

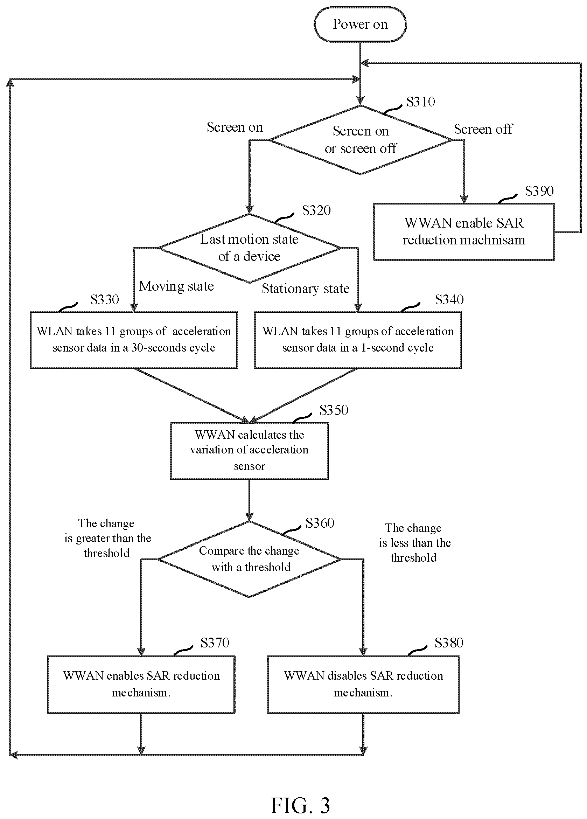

Referring to FIG. 3, in one scenario, taking antenna control of a mobile phone as an example, the mobile phone applies the embodiment to perform antenna control through a wireless wide area network module. The antenna control process includes steps S310 to S390 as shown in FIG. 3.

At step S310, determine whether the screen state of the mobile phone is in a screen-on state or screen-off state.

Specifically, the screen state of the mobile phone is monitored through a predetermined network module in the mobile phone. The screen state includes screen-on state or screen-off state. In this step, the predetermined network module is a wireless wide area network (WWAN) module.

At step S320, determine the last mobile phone state.

The last motion state of the mobile phone is determined by the wireless wide area network module. If the last motion state of the mobile phone is a moving state, the cycle corresponding to the wireless wide area network module is the third cycle. When the last motion state of the mobile phone is a stationary state, the cycle corresponding to the wireless wide area network module is set as a fourth cycle which is less than the third cycle. For example, the third cycle is 30 seconds, and the fourth cycle is 1 second. The number of groups corresponding to the wireless wide area network module is the second predetermined number of groups, and the second predetermined number of groups is 11 groups.

At step S330, the WWAN module takes 11 groups of acceleration sensor data (i.e., 11 groups of sensing data) with a cycle of 30 seconds. Specifically, when the last motion state of the mobile phone is a moving state, the wireless wide area network module extracts 11 groups of sensing data of the acceleration sensor in the mobile phone at the application layer, according to the third cycle of 30 seconds and the second predetermined number of groups being 11 groups.

At step S340, WWAN takes 11 groups of acceleration sensor data (i.e., 11 groups of sensing data) with a cycle of 1 second. Specifically, when the last motion state of the mobile phone is a stationary state, the wireless wide area network module extracts 11 groups of sensing data of the acceleration sensor in the mobile phone at the application layer according to the fourth cycle of 1 second and the second predetermined number of groups being 11 groups.

At step S350, the WWAN calculates the variation of the acceleration sensor. Specifically, there are 11 groups of sensing data as shown in the following table.

| Group | Sensor data |
|---------|-------------|
| Group 1 | $x_1$ , $y_1$ , $z_1$ |
| Group 2 | $x_2$ , $y_2$ , $z_2$ |
|  |  |
| Group 11 | $x_{11}$ , $y_{11}$ , $z_{11}$ |

Specifically, it can be calculated according to the following formula:

$$a1=\sqrt{(x_2 - x_1)^2 + (y_2 - y_1)^2 + (z_2 - z_1)^2}$$

$$a2=\sqrt{(x_3 - x_2)^2 + (y_3 - y_2)^2 + (z_3 - z_2)^2}$$

...

$$a10=\sqrt{(x_{11} - x_{10})^2 + (y_{11} - y_{10})^2 + (z_{11} - z_{10})^2}$$

Then, an average value $a_{avg}$ used as the acceleration variation is obtained by averaging 8 acceleration values selected from the 10 acceleration values $a_1, a_2, a_3, a_4, a_5, a_6, a_7, a_8, a_9, a_{10}$ excluding the maximum value and the minimum value.

At step S360, compare the change amount with the threshold.

Specifically, when the acceleration variation is greater than the second threshold, the mobile phone is in a moving state. When the acceleration variation is less than the second threshold, the mobile phone is in a stationary state. Upon a condition that the second threshold is 0.06m/s2, when the acceleration variation is greater than 0.02m/s2, the mobile phone is in a moving state. When the acceleration variation is less than 0.02m/s2, the mobile phone is in a stationary state.

Step S370: WWAN module enables the SAR reduction mechanism.

Specifically, when the motion state is a moving state, the mechanism for reducing the electromagnetic wave absorption ratio of the wireless wide area network antenna is enabled through the wireless wide area network module.

The wireless wide area network antenna corresponding to the wireless wide area network module can be a transmitting antenna of Global System for Mobile Communications (GSM), Wideband Code Division Multiple Access (WCDMA), LTE, 5G (the 5th Generation, the fifth generation of wireless communication technology), etc.

Step S380: WWAN disables the SAR reduction mechanism.

Specifically, when the stationary state is a stationary state, the mechanism for reducing the electromagnetic wave absorption ratio of the wireless wide area network antenna is disabled by the wireless wide area network module.

Step S390: WWAN enables the SAR reduction mechanism.

Specifically, when the screen is off, the wireless wide area network module enables the mechanism for reducing the electromagnetic wave absorption ratio of the wireless wide area network antenna. When the screen of the mobile phone is in a screen-off state, it can avoid extracting data from the acceleration sensor, avoid the need to periodically wake up the CPU that is originally in standby mode, and avoid increasing the power consumption of the mobile phone in standby mode.

In order to facilitate better implementation of the antenna control method provided in the embodiment of the present disclosure, the embodiment of the present disclosure also provides an antenna control device based on the above antenna control method. The meanings of the terms are the same as those in the above antenna control method, and the specific implementation details can refer to the description in the method embodiment. FIG. 3 illustrates a block diagram of an antenna control device according to an embodiment of the present disclosure.

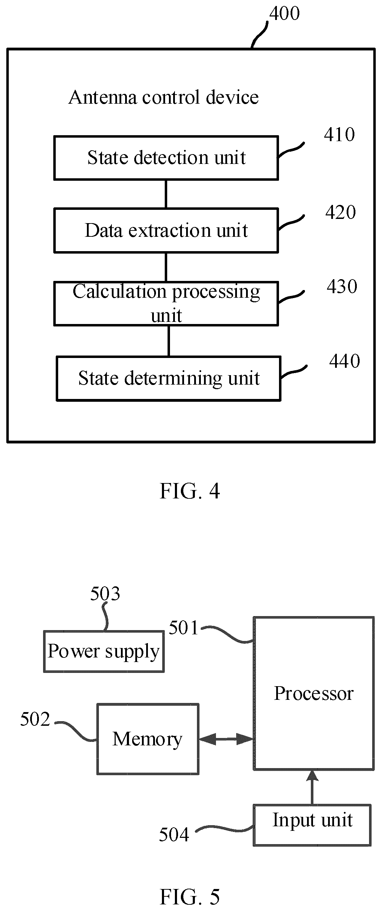

As illustrated in FIG. 4, the antenna control device 400 includes a predetermined network module. The predetermined network module includes a state detection unit 410, a data extraction unit 420, a calculation processing unit 430, and a state determining unit 440. The state detection unit 410 is configured to monitor a screen state of the device. The data extraction unit 420 is configured to extract a plurality of groups of sensing data sensed by an acceleration sensor in the device according to a cycle and a number of groups when the screen state is a screen-on state. The calculation processing unit 430 is configured to calculate an acceleration variation based on the plurality of groups of sensing data. The state determining unit 440 is configured to determine, according to the acceleration variation, a motion state for determining whether to disable a mechanism for reducing an electromagnetic wave absorption ratio of an antenna in the device.

In some embodiments of the present disclosure, the predetermined network module is a wireless local area network module, and the number of groups is a first predetermined number of groups. The data extraction unit 420 is configured to determine the cycle, and extract the plurality of groups of sensing data sensed by the acceleration sensor in the device at a framework layer according to the cycle and the first predetermined number of groups. Each of the plurality of groups of sensing data is different.

In some embodiments of the present disclosure, the data extraction unit 420 is configured to: determine a last motion state of the device by the wireless local area network module; set the cycle corresponding to the wireless local area network module as a first cycle when the last motion state of the device is a moving state; set the cycle corresponding to the wireless local area network module as a second cycle less than the first cycle when the last motion state of the device is a stationary state.

In some embodiments of the present disclosure, the motion states include a moving state or a stationary state; the state determining unit is used to: determine that the device is in the moving state when the acceleration variation is greater than a first threshold; and determine that the device is in the stationary state when the acceleration variation is less than the first threshold.

In some embodiments of the present disclosure, the wireless LAN module also includes a mechanism switch unit which is used to enable a mechanism for reducing the electromagnetic wave absorption ratio of a wireless local area network antenna by the wireless local area network module when the motion state is a moving state, and to disable the mechanism for reducing the electromagnetic wave absorption ratio of the wireless local area network antenna by the wireless local area network module when the motion state is a stationary state.

In some embodiments of the present disclosure, the wireless LAN module also includes a marking unit which is used to: set a first flag bit in the framework layer by the wireless local area network module when the mechanism for reducing the electromagnetic wave absorption ratio of the wireless local area network antenna is enabled; set the second flag bit is in the framework layer by the wireless local area network module when the mechanism for reducing the electromagnetic wave absorption ratio of the wireless local area network antenna is disabled; enable a mechanism for reducing the electromagnetic wave absorption ratio of a wireless wide area network antenna by the wireless wide area network module when a wireless wide area network (WAN) module detects that a flag bit in the framework layer transitions from the second flag bit to the first flag bit; and disable the mechanism for reducing the electromagnetic wave absorption ratio of the wireless wide area network antenna by the wireless wide area network module when the wireless wide area network module detects that the flag bit in the framework layer transitions from the first flag bit to the second flag bit.

In some embodiments of the present disclosure, the predetermined module is a wireless wide area network module, the number of groups is a second predetermined number of groups greater than the first predetermined number of groups. The data extraction unit is used to: determine the cycle by the wireless wide area network module, and extract, by the wireless wide area network module, the plurality of groups of sensing data sensed by the acceleration sensor in the device at an application according to the cycle and the second predetermined number of groups.

In some embodiments of the present disclosure, the data extraction unit is used to: determine a last motion state of the device by the wireless wide area network module; set the cycle corresponding to the wireless wide area network module as a third cycle when the last motion state of the device is a moving state; set the cycle corresponding to the wireless wide area network module as a fourth cycle less than the third cycle when the last motion state of the device is a stationary state.

In some embodiments of the present disclosure, the motion states include a moving state or a stationary state; the state determining unit is used to: determine that the device is in the moving state when the acceleration variation is greater than a second threshold greater than the first threshold, and determine that the device is in the stationary state when the acceleration variation is less than the second threshold.

In some embodiments of the present disclosure, the wireless wide area network module also includes a mechanism switch unit which is used to: enable a mechanism for reducing the electromagnetic wave absorption ratio of a wireless wide area network antenna by the wireless wide area network module when the motion state is a moving state; and disable the mechanism for reducing the electromagnetic wave absorption ratio of the wireless wide area network antenna by the wireless wide area network module when the stationary state is a stationary state.

In some embodiments of the present disclosure, the wireless LAN module further includes a screen-off processing unit, which is used to enable the mechanism for reducing the electromagnetic wave absorption ratio of the wireless local area network antenna by the wireless LAN module in response to a screen-off state.

In some embodiments of the present disclosure, the wireless WAN module further includes a screen-off processing unit, which is used to enable the mechanism for reducing the electromagnetic wave absorption ratio of the wireless local area network antenna by the wireless WAN module in response to a screen-off state.

It should be noted that, although several modules or units of the equipment for action execution are mentioned in the above detailed description, this division is not mandatory. In fact, according to the embodiments of the present disclosure, the features and functions of two or more modules or units described above can be embodied in one module or unit. On the contrary, the features and functions of one module or unit described above can be further divided into being embodied by multiple modules or units.

In addition, an embodiment of the present disclosure further provides an electronic device, which may be a terminal or a server. Please refer to FIG. 5 illustrating a block diagram of an electronic device according to another embodiment of the present disclosure.

The electronic device includes a processor 501 with one or more processing cores, a memory 502 with one or more computer-readable storage media, a power supply 503, and an input unit 504. Those skilled in the art will appreciate that the electronic device structure shown in FIG. 5 does not limit the electronic device, and may include more or fewer components than shown in the figure, or combine certain components, or arrange the components differently.

The processor 501 is the control center of the electronic device. It uses various interfaces and lines to connect various parts of the entire computer device. By running or executing software programs and/or modules stored in the memory 502 and calling data stored in the memory 502, it executes various functions of the computer device and processes data, thereby monitoring the electronic device as a whole. Optionally, the processor 501 may include one or more processing cores. Preferably, the processor 501 may integrate an application processor and a modem processor, wherein the application processor mainly processes the operating system, user pages and application programs, etc., and the modem processor mainly processes wireless communications. It is understandable that the above-mentioned modem processor may not be integrated into the processor 501.

The memory 502 can be used to store software programs and modules. The processor 501 executes various functional applications and data processing by running the software programs and modules stored in the memory 502. The memory 502 includes program storage area and data storage area, where the program storage area may store an operating system, an application required for at least one function (such as a sound playback function, an image playback function, etc.), etc.; the data storage area may store data created according to the use of the computer device, etc. In addition, the memory 502 includes a high-speed random access memory, a non-volatile memory, such as at least one disk storage device, a flash memory device, or other volatile solid-state storage devices. Accordingly, the memory 502 may also include a memory controller to provide the processor 501 with access to the memory 502.

The electronic device also includes a power supply 503 for supplying power to each component. Preferably, the power supply 503 can be logically connected to the processor 501 through a power management system, so as to manage charging, discharging, power consumption and other functions through the power management system. The power supply 503 can also include one or more DC or AC power supplies, recharging systems, power failure detection circuits, power converters or inverters, power status indicators and other arbitrary components.

The electronic device may further include an input unit 504, which may be used to receive input digital or character information and generate keyboard, mouse, joystick, optical or trackball signal input related to user settings and function control.

Although not shown, the electronic device may further include a display unit, etc., which will not be described in detail herein. Specifically in this embodiment, the processor 501 in the electronic device will load the executable files corresponding to the processes of one or more computer programs into the memory 502 according to the following instructions, and the processor 501 will run the computer program stored in the memory 502, thereby realizing various functions in the embodiments of the present disclosure, such as the processor 501 may perform the following operations:

monitoring a screen state of a device by using a predetermined network module in the device; when the screen state is a screen-on state, extracting a plurality of groups of sensing data sensed by an acceleration sensor in the device according to a cycle and a number of groups; calculating an acceleration variation based on the plurality of groups of sensing data; and determining, according to the acceleration variation, a motion state for determining whether to disable a mechanism for reducing an electromagnetic wave absorption ratio of an antenna in the device.

Those skilled in the art will appreciate that all or part of the steps in the various methods of the above embodiments may be completed by a computer program, or by controlling related hardware through a computer program. The computer program may be stored in a computer-readable storage medium and loaded and executed by a processor.

To this end, an embodiment of the present disclosure further provides a storage medium, in which a computer program is stored. The computer program can be loaded by a processor to execute the steps in any method provided in the embodiment of the present disclosure.

The storage medium may include: a read-only memory (ROM), a random access memory (RAM), a magnetic disk or an optical disk, etc.

Since the computer program stored in the storage medium can execute the steps in any method provided in the embodiments of the present disclosure, the beneficial effects that can be achieved by the method provided in the embodiments of the present disclosure can be achieved. Please refer to the previous embodiments for details and will not be repeated here.

Those skilled in the art will readily appreciate other embodiments of the present disclosure after considering the specification and practicing the embodiments disclosed herein. The present disclosure is intended to cover any variations, uses or adaptations of the present disclosure, which follow the general principles of the present disclosure and include common knowledge or customary technical means in the art that are not disclosed in the present disclosure.

It should be understood that the present disclosure is not limited to the embodiments that have been described above and shown in the accompanying drawings, but various modifications and changes may be made without departing from the scope thereof.

**Claims**

1. A method of controlling an antenna, **characterized in that** the method comprises:

   monitoring a screen state of a device by using a predetermined network module in the device;
   when the screen state is a screen-on state, extracting a plurality of groups of sensing data sensed by an acceleration sensor in the device according to a cycle and a number of groups;
   calculating an acceleration variation based on the plurality of groups of sensing data; and
   determining, according to the acceleration variation, a motion state for determining whether to disable a mechanism for reducing an electromagnetic wave absorption ratio of an antenna in the device.

2. The method according to claim 1, wherein the predetermined network module is a wireless local area network (LAN) module, and the number of groups is a first predetermined number of groups;
   the extracting the plurality of groups of sensing data sensed by the acceleration sensor in the device according to the cycle and the number of groups comprises:

   determining the cycle by the wireless local area network module;
   extracting, by the wireless local area network module, the plurality of groups of sensing data sensed by the acceleration sensor in the device at a framework layer according to the cycle and the first predetermined number of groups, wherein each of the plurality of groups of sensing data is different.

3. The method according to claim 2, wherein the determining the cycle by the wireless local area network module comprises:

   determining a last motion state of the device by the wireless local area network module;
   setting the cycle corresponding to the wireless local area network module set as a first cycle when the last motion state of the device is a moving state; and
   setting the cycle corresponding to the wireless local area network module as a second cycle less than the first cycle when the last motion state of the device is a stationary state.

4. The method according to claim 2, wherein the motion state comprises a moving state or a stationary state; and the determining the motion state according to the acceleration variation comprises:

   determining that the device is in the moving state when the acceleration variation is greater than a first threshold; and
   determining that the device is in the stationary state when the acceleration variation is less than the first threshold.

5. The method according to any one of claims 1 to 4, wherein after determining the motion state according to the acceleration variation, the method further comprises:

   when the motion state is a moving state, enabling a mechanism for reducing the electromagnetic wave absorption ratio of a wireless local area network antenna by the wireless local area network module; and
   when the motion state is a stationary state, disabling the mechanism for reducing the electromagnetic wave absorption ratio of the wireless local area network antenna by the wireless local area network module.

6. The method according to claim 5, further comprising:

setting a first flag bit in the framework layer by the wireless local area network module when the mechanism for reducing the electromagnetic wave absorption ratio of the wireless local area network antenna is enabled;
setting the second flag bit is in the framework layer by the wireless local area network module when the mechanism for reducing the electromagnetic wave absorption ratio of the wireless local area network antenna is disabled;
enabling a mechanism for reducing the electromagnetic wave absorption ratio of a wireless wide area network antenna by the wireless wide area network module when a wireless wide area network (WAN) module detects that a flag bit in the framework layer transitions from the second flag bit to the first flag bit; and
disabling the mechanism for reducing the electromagnetic wave absorption ratio of the wireless wide area network antenna by the wireless wide area network module when the wireless wide area network module detects that the flag bit in the framework layer transitions from the first flag bit to the second flag bit.

7. The method according to claim 1, wherein the predetermined module is a wireless wide area network module, the number of groups is a second predetermined number of groups which is greater than the first predetermined number of groups;
the extracting the plurality of groups of sensing data sensed by the acceleration sensor in the device according to the cycle and the number of groups comprises:

determining the cycle by the wireless wide area network module; and
extracting, by the wireless wide area network module, the plurality of groups of sensing data sensed by the acceleration sensor in the device at an application according to the cycle and the second predetermined number of groups.

8. The method according to claim 7, wherein the determining the cycle by the wireless wide area network module comprises:

determining a last motion state of the device by the wireless wide area network module;
setting the cycle corresponding to the wireless wide area network module as a third cycle when the last motion state of the device is a moving state;
setting the cycle corresponding to the wireless wide area network module as a fourth cycle less than the third cycle when the last motion state of the device is a stationary state.

9. The method according to claim 7, wherein the motion state comprises a moving state or a stationary state; and the determining the motion state according to the acceleration variation comprises:

determining that the device is in the moving state when the acceleration variation is greater than a second threshold greater than the first threshold; and
determining that the device is in the stationary state when the acceleration variation is less than the second threshold.

10. The method according to any one of claim 1 or claims 7 to 9, wherein after determining the motion state according to the acceleration variation, the method further comprises:

when the motion state is a moving state, enabling a mechanism for reducing the electromagnetic wave absorption ratio of a wireless wide area network antenna by the wireless wide area network module; and
when the stationary state is a stationary state, disabling the mechanism for reducing the electromagnetic wave absorption ratio of the wireless wide area network antenna by the wireless wide area network module.

11. The method according to claim 2, wherein after the monitoring the screen state of the device by using the predetermined network module in the device, the method further comprises:
enabling the mechanism for reducing the electromagnetic wave absorption ratio of the wireless local area network antenna by the wireless LAN module in response to a screen-off state.

12. The method according to claim 7, wherein after monitoring the screen state of the device through a predetermined network module in the device, the method further comprises:
enabling the mechanism for reducing the electromagnetic wave absorption ratio of the wireless wide area network antenna by the wireless WAN module in response to a screen-off state.

13. The method according to claim 3, wherein the first cycle is 30 seconds, the second cycle is 1 second, and the first predetermined number of groups is 2 groups.

14. The method according to claim 8, wherein the third cycle is 30 seconds, the second cycle is 1 second, and the second predetermined number of groups is **11** groups.

15. An antenna control device, **characterized in that** the antenna control device comprises a predetermined network module that comprises:

   a state detection unit, configured to monitor a screen state of the device;
   a data extraction unit, configured to extract a plurality of groups of sensing data sensed by an acceleration sensor in the device according to a cycle and a number of groups when the screen state is a screen-on state;
   a calculation processing unit, configured to calculate an acceleration variation based on the plurality of groups of sensing data; and
   a state determining unit, configured to determine, according to the acceleration variation, a motion state for determining whether to disable a mechanism for reducing an electromagnetic wave absorption ratio of an antenna in the device.

16. The antenna control device according to claim 15, wherein the predetermined network module is a wireless local area network module, and the number of groups is a first predetermined number of groups; the data extraction unit is configured to determine the cycle, and extract the plurality of groups of sensing data sensed by the acceleration sensor in the device at a framework layer according to the cycle and the first predetermined number of groups, wherein each of the plurality of groups of sensing data is different.

17. The antenna control device according to claim 15, wherein the predetermined module is a wireless wide area network module, the number of groups is a second predetermined number of groups which is greater than the first predetermined number of groups; the data extraction unit is configured to determine the cycle, and extract the plurality of groups of sensing data sensed by the acceleration sensor in the device at an application according to the cycle and the second predetermined number of groups.

18. The antenna control device according to claim 17, wherein the data extraction unit is configured to determine a last motion state of the device, set the cycle corresponding to the wireless wide area network module as a third cycle when the last motion state of the device is a moving state, and set the cycle corresponding to the wireless wide area network module as a fourth cycle when the last motion state of the device is a stationary state, wherein the third cycle is greater than the fourth cycle.

19. A storage medium storing computer program executable by a processor of a computer to perform the method according to any one of claims 1 to 14.

20. An electronic device, comprising: a memory storing computer program, and a processor executing the computer program to perform the method according to any one of claims 1 to 14.

Monitor a screen state of a device by using a predetermined network module in the device. ⌐ S110

When the screen state is a screen-on state, extracting a plurality of groups of sensing data sensed by an acceleration sensor in the device according to a period and a number of groups. ⌐ S120

Calculate an acceleration variation based on the plurality of groups of sensing data. ⌐ S130

Determine, according to the acceleration variation, a motion state for determining whether to disable a mechanism for reducing an electromagnetic wave absorption ratio of an antenna in the device. ⌐ S140

FIG. 1

Power on

S210
Screen on ⟵ Screen on or off ⟶ Screen off

S220
Moving state ⟵ Last motion state of a device ⟶ Stationary state

S2100
WLAN enables SAR reduction mechanism, and writes "1" in framework layer database.

S230
WLAN takes 2 groups of acceleration sensor data in a 30-seconds cycle

S240
WLAN takes 2 groups of acceleration sensor data in a 1-second cycle

S250
WLAN calculates the change in acceleration.

S290
WWAN monitors changes in the framework layer database.
When it becomes "1", WWAN antenna SAR reduction mechanism is enabled.
When it becomes "0", WWAN antenna SAR reduction mechanism is disabled.

S260
The change is greater than the threshold ⟵ Compare the change with a threshold ⟶ The change is less than the threshold

S270
WLAN enables SAR reduction mechanism, and writes "1" in framework layer database.

S280
WLAN disables SAR reduction mechanism, and writes "0" in framework layer database.

FIG. 2

Power on

S310

Screen on ← Screen on or screen off → Screen off

S390

WWAN enable SAR reduction machnisam

S320

Last motion state of a device

Moving state          Stationary state

S330

WLAN takes 11 groups of acceleration sensor data in a 30-seconds cycle

S340

WLAN takes 11 groups of acceleration sensor data in a 1-second cycle

S350

WWAN calculates the variation of acceleration sensor

The change is greater than the threshold

S360

Compare the change with a threshold

The change is less than the threshold

S370

WWAN enables SAR reduction mechanism.

S380

WWAN disables SAR reduction mechanism.

FIG. 3

400

## Antenna control device

State detection unit — 410

Data extraction unit — 420

Calculation processing unit — 430

State determining unit — 440

FIG. 4

503

Power supply

501

Processor

502

Memory

504

Input unit

FIG. 5

## INTERNATIONAL SEARCH REPORT

| International application No. |
| --- |
| **PCT/CN2023/120803** |

| A. | CLASSIFICATION OF SUBJECT MATTER |
| --- | --- |

H04M 1/72454(2021.01)i

According to International Patent Classification (IPC) or to both national classification and IPC

| B. | FIELDS SEARCHED |
| --- | --- |

Minimum documentation searched (classification system followed by classification symbols)

IPC:H04M

Documentation searched other than minimum documentation to the extent that such documents are included in the fields searched

Electronic data base consulted during the international search (name of data base and, where practicable, search terms used)

CNABS; CNKI; CNTXT; ENTXTC; VCN; ENTXT; VEN; WPABS; DWPI: TCL, 电磁波吸收比, 电磁波吸收率, 电磁辐射, 功率, 加速度, 降低, 动静, 运动, 静止, 屏幕, 黑屏, 亮屏, 熄灭, 点亮, 无线局域网, SAR, power, move, motion, screen, black, light, acceleration

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 111614840 A (HUIZHOU TCL MOBILE COMMUNICATION CO., LTD.) 01 September 2020 (2020-09-01)<br>description, paragraphs [0002]-[0137], and figures 1-6 | 1-20 |
| Y | CN 110138402 A (HUAQIN TELECOM TECHNOLOGY CO., LTD.) 16 August 2019 (2019-08-16)<br>description, paragraphs [0001]-[0050], and figures 1-7 | 1-20 |
| Y | CN 109982423 A (GUANGDONG OPPO MOBILE TELECOMMUNICATIONS CORP., LTD.) 05 July 2019 (2019-07-05)<br>description, paragraphs [0001]-[0130], and figures 1-7 | 1-20 |
| A | WO 2020097919 A1 (SHENZHEN HEYTAP TECHNOLOGY CO., LTD. et al.) 22 May 2020 (2020-05-22)<br>entire document | 1-20 |
| A | CN 105704745 A (BEIJING XIAOMI MOBILE SOFTWARE CO., LTD.) 22 June 2016 (2016-06-22)<br>entire document | 1-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 November 2023** | **05 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/120803** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 108848251 A (GREE ELECTRIC APPLIANCES INC. OF ZHUHAI) 20 November 2018 (2018-11-20)<br>entire document | 1-40 |
| A | US 2020348745 A1 (DELL PRODUCTS L.P.) 05 November 2020 (2020-11-05)<br>entire document | 1-20 |

Form PCT/ISA/210 (second sheet) (July 2022)

## INTERNATIONAL SEARCH REPORT
### Information on patent family members

International application No.

**PCT/CN2023/120803**

| Patent document cited in search report | | | Publication date (day/month/year) | Patent family member(s) | | | Publication date (day/month/year) |
|---|---|---|---|---|---|---|---|
| CN | 111614840 | A | 01 September 2020 | None | | | |
| CN | 110138402 | A | 16 August 2019 | None | | | |
| CN | 109982423 | A | 05 July 2019 | None | | | |
| WO | 2020097919 | A1 | 22 May 2020 | None | | | |
| CN | 105704745 | A | 22 June 2016 | None | | | |
| CN | 108848251 | A | 20 November 2018 | None | | | |
| US | 2020348745 | A1 | 05 November 2020 | US | 11009936 | B2 | 18 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 2022116104946